# EUROPÄISCHE PATENTSCHRIFT

(11) **EP 1 166 228 B1**
(45) Veröffentlichungstag und Bekanntmachung des Hinweises auf die Patenterteilung: **07.08.2002**
(21) Anmeldenummer: 00914173.0
(22) Anmeldetag: 30.03.2000
(51) Int. Cl.: G06N 5/02

(54) **VERFAHREN ZUR NUTZUNG VON FRAKTALEN SEMANTISCHEN NETZEN FÜR ALLE ARTEN VON DATENBANK-ANWENDUNGEN**
METHOD FOR USING FRACTAL SEMANTIC NETWORKS FOR ALL KINDS OF DATA BASE APPLIANCES
UTILISATION DE RESEAUX SEMANTIQUES FRACTALS POUR TOUS TYPES D'APPLICATIONS DE BASE DE DONNEES

(30) Priorität: 30.03.1999 DE 19914326
(43) Veröffentlichungstag der Anmeldung: 02.01.2002
(73) Patentinhaber: Definiens AG, 80339 München (DE)
(72) Erfinder: BAATZ, Martin, D-80799 München (DE); SCHMIDT, Günter, D-82008 Unterhaching (DE); KHARADI, Andrej, 12049 Berlin (DE)
(74) Vertreter: Winter, Brandl, Fürniss, Hübner, Röss, Kaiser, Polte Partnerschaft
(86) Internationale Anmeldenummer: EP0002828
(87) Internationale Veröffentlichungsnummer: WO0060497

(56) Entgegenhaltungen:
- YING-KUEI YANG: "BEHIND THE INHERITANCE RELATIONS IN A SEMANTIC NETWORK" , PROCEEDINGS OF THE SOUTHEAST CONFERENCE (SOUTHEASTCON),US,NEW YORK, IEEE, VOL. -, PAGE(S) 289-295 XP000203113 das ganze Dokument
- BIEBOW B ET AL: "ENRICHMENT OF SEMANTIC NETWORK FOR REQUIREMENTS EXPRESSED IN NATURAL LANGUAGE" , PROCEEDINGS OF THE IFIP WORLD COMPUTER CONGRESS,NL,AMSTERDAM, NORTH HOLLAND, VOL. CONGRESS 11, PAGE(S) 693-698 XP000079125 Zusammenfassung Seite 697, linke Spalte, Zeile 28 -Seite 698, linke Spalte, Zeile 21
- TUDHOPE D ET AL: "Navigation via similarity: automatic linking based on semantic closeness" INFORMATION PROCESSING & MANAGEMENT,GB,ELSEVIER, BARKING, Bd. 33, Nr. 2, 1. März 1997 (1997-03-01), Seiten 233-242, XP004091798 ISSN: 0306-4573

## Beschreibung

Die vorliegende Erfindung bezieht sich auf ein computerimplementiertes Verfahren zur Nutzung von fraktalen semantischen Netzen für alle Arten von Datenbank-Anwendungen.

Zum Speichern von Informationen werden herkömmlicherweise Datenbanken oder Dateisysteme verwendet, die eng miteinander verwandt sind.

Hierbei werden in relationalen Datenbanken Daten bzw. Informationen in Tabellen abgelegt, wobei die Tabellen untereinander verknüpft sein können. Die Einträge in den Tabellen weisen sowohl elementare Attribute, wie zum Beispiel Fließkommazahlen, Text und Kalenderdaten, als auch komplexer strukturierte Objekte, wie zum Beispiel Bilddaten, Audiodaten usw., auf. Zum Auslesen der Informationen wird eine teilstandardisierte Abfragesprache (SQL) verwendet, um Einträge mit bestimmten Elementar-Attributen zu finden und zu extrahieren. Funktionen innerhalb einer derartigen herkömmlichen Datenbank, die die Attribute oder auch die Struktur der Tabellen verändern, heißen "stored procedures" und sind nicht standardisiert.

Ferner können Informationen gemeinsam mit Funktionen als Objekte einer objektorientierten Programmiersprache, wie zum Beispiel C++, JAVA, small talk, usw., formuliert werden. Derartige herkömmliche Systeme werden als objektorientierte Datenbanken bezeichnet. Hierbei können auf sehr einfache Weise komplexer strukturierte Daten bzw. Informationen, wie zum Beispiel Geometrie-Daten eines

CAD-Programms, gespeichert und verändert werden. Die Abfrage (information retrieval) nach Attributen und Objekt-Klassen ist dabei standardisiert (OQL), wobei keine Objekt-Funktionen verwendet werden. Allerdings ist die Definition der Objekte (Vererbungshierarchie, Attribute, Funktionen usw.) sehr statisch, weshalb es außerordentlich aufwendig und zur Laufzeit des Datenbanksystems unmöglich ist, die Definition eines Objekts in einer neuen Version zu ändern.

Demgegenüber stellen herkömmliche Dateisysteme die Basis für die Arbeit eines Computer-Betriebssystems dar. In diesen herkömmlichen Dateisystemen sind die Daten bzw. Informationen von den Funktionen bzw. Programmen, die die Daten verändern, getrennt. Die Suche nach Dateien und Programmen beschränkt sich folglich auf einfache Suchbegriffe, wie zum Beispiel Name, Dateigröße, Erstellungsdatum usw. Zum Navigieren in derartigen herkömmlichen Dateisystemen wird zumeist ein hierarchischer Baum (mit Querverweisen) verwendet. Die einzelnen Daten bzw. Informationsblöcke können hierbei einen Verweis auf das Programm, das sie verarbeiten kann, enthalten.

Aus Ying-Kuei Yang: "BEHIND THE INHERITANCE RELATIONS IN A SEMANTIC NETWORK", Proceedings of the Southeast Conference (Southeastcon), US, New York, IEEE, Seiten 289 bis 295, XP000203113 ist ein Verfahren gemäß dem Oberbegriff des Anspruchs 1 bekannt.

Diese herkömmlichen Verfahren zum Speichern von Informationen besitzen jedoch den Nachteil, daß sie lediglich eine geringe Flexibilität aufweisen sowie wenig assoziativ und zum Teil nicht objektorientiert sind. Ferner ist es lediglich mit großem Aufwand möglich, in heterogene Datenbestände neue Daten hinzuzufügen bzw. schon integrierte Daten aktuell zu halten.

Der vorliegenden Erfindung liegt daher die Aufgabe zugrunde, ein Verfahren zur Nutzung von fraktalen semantischen Netzen für alle Arten von Datenbank-Anwendungen zu schaffen, das eine hohe Flexibilität, eine einfache Dateneingabe, Möglichkeiten zur selbständigen Aktualisierung und ein stabiles und einfaches Auffinden von Daten aufweist.

Diese Aufgabe wird erfindungsgemäß mit den in Anspruch 1 angegebenen Maßnahmen gelöst.

Weitere vorteilhafte Ausgestaltungen der vorliegenden Erfindung sind Gegenstand der Unteransprüche.

Nachstehend erfolgt die Beschreibung eines Ausführungsbeispiels der vorliegenden Erfindung.

Bezüglich der Grundfunktionalitäten der Datenbank und der in dieser Anmeldung verwendeten Begriffe "semantisches Netz", "semantische Einheit", "Verknüpfungseinheit" und "Janus-Einheit" wird auf die Anmeldung DE-A-199 08 244 mit dem Titel "Praktales Netz n-ter Ordnung zum Behandeln komplexer Strukturen" verwiesen, wobei die Begriffe "semantisches Netz" und "fraktales Netz" als gleichbedeutend anzusehen sind. Die in vorstehend genannter Anmeldung offenbarten Merkmale bezüglich des Aufbaus und der Funktionsweise des "fraktalen Netzes", der "semantischen Einheit", der "Verknüpfungseinheit" und der "Janus-Einheit" gelten als in dieser Anmeldung durch Verweis eingeschlossen.

Allgemein ausgedrückt enthält ein fraktales semantisches Netz sowohl semantische Einheiten, die jeweils Informationsinhalte besitzen, als auch Verknüpfungseinheiten, die einen Beziehungsinhalt beschreiben, der jeweils zwei semantische Einheiten derart verknüpft, daß die gegenseitige Beziehung der beiden verknüpften semantischen Einheiten durch den Beziehungsinhalt bestimmt wird.

Beziehungsinhalte von Verknüpfungseinheiten, das heißt, jeweilige Verknüpfungstypen, können im allgemeinen von einem Anwender frei gewählt werden. Es ist jedoch sinnvoll, einige elementare Beziehungsinhalte von Verknüpfungseinheiten in einer Basisbibliothek vorab zu definieren. Als elementare Beziehungsinhalte von Verknüpfungseinheiten können Austauschbeziehungen und Relationen angesehen werden. Austauschbeziehungen sind als derartige Beziehungen definiert, die einen abstrakten, stofflichen und/oder kommunikativen Austausch zwischen semantischen Einheiten beschreiben. Relationen sind hingegen jene Beziehungsinhalte von Verknüpfungseinheiten, die irgendwelche Beziehungen zwischen semantischen Einheiten beschreiben. Mittels dieser Verknüpfungseinheiten besteht demgemäß die Möglichkeit, ein Netz aus semantischen Einheiten auszubilden, das übergeordnete, untergeordnete und nebengeordnete semantische Einheiten aufweisen kann.

Es besteht die Möglichkeit, besondere semantische Einheiten in das fraktale semantische Netz aufzunehmen, die in der Lage sind, an anderen semantischen Einheiten bestimmte Operationen auszuführen. Diese besonderen semantischen Einheiten werden im weiteren Verlauf als Janus-Einheiten bezeichnet.

In diesem Zusammenhang bezeichnet eine Janus-Einheit eine besondere semantische Einheit, die einen Algorithmus oder eine Sammlung von Algorithmen aufweist, die den Informationsinhalt von semantischen Einheiten verändern und/oder neue semantische Einheiten erzeugen bzw. bestehende semantische Einheiten vernichten können. Eine Janus-Einheit ist über jeweils eine besondere Verknüpfungseinheit eines Typs "hat Janus/Funktion/ist Janus/Funktion von" mit einer oder mehreren semantischen Einheiten verbunden, in deren Nachbarschaft die Janus-Einheit operieren soll.

Dies bedeutet, daß eine Funktionalität der Janus-Einheit, das heißt eine Janus-Funktionalität, derart eingeschränkt ist, daß sie lediglich in der Lage ist, an denjenigen semantischen Einheiten die bestimmten Operationen durchzuführen, die sich in einem vorgegebenen Nachbarschaftsbereich einer mit ihr verknüpften semantischen Einheit befinden. Ferner kann eine Janus-Einheit über eine oder mehrere Verknüpfungseinheiten mit anderen Janus-Einheiten verknüpft sein.

Die wesentliche Aufgabe einer Janus-Einheit ist das Bündeln und Kontexten von Informationsinhalten. Hierbei ist unter Bündeln das Berechnen von Informationsinhalten einer als Zentrum dienenden semantischen Einheit aus den Informationsinhalten von benachbarten semantischen Einheiten zu verstehen. Unter Kontexten ist der zum Bündeln analog inverse Vorgang zu verstehen, das heißt Informationsinhalte der benachbarten semantischen Einheiten werden in Abhängigkeit der Informationsinhalte der als Zentrum dienenden semantischen Einheit geändert, wobei diese die Nachbarschaft definiert. Auf diese Weise ist es zum Beispiel auf einfache Weise möglich, ständig aktuelle Statistiken einer Menge von semantischen Einheiten zu erhalten (Bündeln) bzw. Änderungen von Rahmenbedingungen aktuell an eine Menge von semantischen Einheiten weiterzuleiten (Kontexten).

Unter Klassifikation einer semantischen Einheit ist im folgenden zu verstehen: Klassifikation von Attributen dieser semantischen Einheit, auch Fuzzy-Klassifikation; und Klassifikation der Vernetzung dieser semantischen Einheit in einer bestimmten Netzumgebung unter Berücksichtigung von Art, Inhalt und Zusammensetzung (Unterobjekte in einer Einbettungshierarchie) der anderen semantischen Einheiten in dieser Netzumgebung.

Die Bestimmung eines Umgebungs-Teilnetzes erfolgt durch Angabe der entsprechenden Verknüpfungstypen, eines Distanzwerts und eines Algorithmus zur Berechnung der Distanz.

Unter einem Teilnetz kann im folgenden immer auch eine einzelne semantische Einheit zu verstehen sein.

Kategorie-Einheiten sind semantische Einheiten, die eine allgemeine Kategorie bzw. Klasse beschreiben.

Instanz-Einheiten sind semantische Einheiten, die eine konkrete Ausprägung einer oder mehrerer Kategorien bzw. Klassen sind.

Nachstehend erfolgt die Beschreibung des Aufbaus, der Veränderung und der Erweiterung eines fraktalen Wissensnetzes zur Speicherung von Informationen.

Das fraktale wissensnetz entspricht der Datenbank und besteht aus der Gesamtheit von vernetzten Kategorie-Einheiten, an Kategorie-Einheiten gebundenen Janus-Einheiten und vernetzten Instanz-Einheiten. Kategorie- und Instanz-Einheiten sind semantische Einheiten und können damit auch semantische Verknüpfungseinheiten sein.

Nachstehend erfolgt die Beschreibung von semantischen Kategorie-Einheiten mit entsprechenden Attributen, was einer Definition eines Datenbank-Schemas entspricht.

Die Kategorie-Einheiten werden miteinander vernetzt, wie es nachstehend beschrieben wird.

Es werden Janus-Einheiten (Funktionen und Algorithmen, zum Beispiel Datensicherung und Abgleich, Statistik-Erhebung, Klassifikation, Verhalten der semantischen Einheiten bei Benutzerinteraktion) definiert und die Funktionalität der Janus-Einheiten, das heißt, die Janus-Funktionalität, wird durch Verknüpfung mit entsprechenden semantischen Kategorie-Einheiten diesen semantischen Kategorie-Einheiten zugewiesen. Zum Teil entspricht diese Funktionalität den "stored procedures" einer konventionellen Datenbank, wobei diese jedoch nicht an eine Kategorie gebunden sind.

Es werden Eingabe-Teilnetze in Form von vernetzen Instanz-Einheiten unter Nutzung von vorgegebenen Kategorie-Einheiten erstellt. Dabei werden Instanz-Einheiten über semantische Verknüpfungseinheiten eines Typ "ist im allgemeinen" mit den Kategorie-Einheiten verknüpft.

Gegebenenfalls erfolgt eine zusätzliche Verknüpfung der derart erstellten Eingabe-Teilnetze und/oder der in ihnen enthaltenen Instanz-Einheiten mit dem Wissensnetz. Dies geschieht automatisch mit Hilfe von Janus-Einheiten und/oder manuell. Die derart erstellten Verknüpfungen können gegebenenfalls nachträglich geändert werden.

Durch die automatische Verknüpfung mit Hilfe von Janus-Einheiten verändern diese Janus-Einheiten die Vernetzung von Instanz-Einheiten untereinander und zwischen Instanz-Einheiten und Kategorie-Einheiten. Zur Entscheidung, wie verändert wird, kann vorher eine Klassifikation der Instanz-Einheit und/oder ihrer Netzumgebung erfolgen. Die Art und Weise der Klassifikation und der Algorithmus zur Strukturänderung ist in diesem Fall in der jeweiligen Janus-Einheit beschrieben.

Wenn eine Instanz-Einheit oder ein Eingabe-Teilnetz einer bestimmten Kategorie-Einheit zugeordnet worden ist, die selbst oder deren weitere Generalisierungen mit Janus-Einheiten verknüpft sind, so werden deren Funktionalitäten auf die jeweilige Instanz-Einheit/auf das jeweilige Teilnetz und ihre/seine Nachbarschaft im Netz angewendet.

Nachstehend wird ein Abfragen von Informationen und eine Selektion von Teilnetzen beschrieben.

Das Abfragen von Informationen aus der Datenbank und/oder das Selektieren von semantischen Teilnetzen und/oder semantischen Einheiten kann als Klassifikation aufgefaßt werden. Die Eingabe der Abfrage- und/oder Selektionskriterien erfolgt textuell und/oder durch Beschreibung eines zu suchenden Teilnetzes unter Verwendung von Kategorie-Einheiten und/oder Instanz-Einheiten des Wissensnetzes und/oder durch Definition einer bestimmten Netzumgebung zur Klassifikation und/oder durch Definition einer bestimmten Netzumgebung zur Selektion von Teilnetzen bezüglich gegebener semantischer Einheiten.

Eine Abfrage bzw. Selektion gibt als Ergebnis immer eines oder mehrere Teilnetze zurück. Im folgenden kann auch auf diese Teilnetze wiederum eine Abfrage bzw. Selektion angewendet werden, bis das gewünschte Ergebnis erhalten wird und/oder sich die Ergebnisse nicht mehr ändern.

Nachstehend wird die textuelle Eingabe beschrieben.

Eine mögliche Form der Abfrage ist die textuelle Eingabe von Suchbegriffen. Wesentlich für die vorliegende Erfindung ist dabei, daß nicht nur nach logischen Ausdrücken gesucht werden kann (zum Beispiel: Query("Frau" AND "Spiegel")), sondern auch nach komplex strukturierten Begriffen (zum Beispiel: Query("(Lena mit Hut) vor Spiegel")).

Bei dieser Form der Eingabe werden die Textbestandteile auf geeignete Weise mit denjenigen Kategorie-Einheiten verknüpft, deren Name am besten paßt (exakter oder besser Fuzzy-Text-Match). Anschließend wird im Wissensnetz nach ähnlichen Strukturen gesucht. Das Ergebnis der Abfrage besteht dann aus einer Reihe von gefundenen Teilnetzen, die jeweils als zusätzliche Information ein Maß für die Ähnlichkeit zur Suchanfrage enthalten können.

Nachstehend wird die Beschreibung eines zu suchenden Teilnetzes beschrieben.

Eine weitere Form der Abfrage erfolgt durch Eingabe eines Beispiels. Analog zum Erweitern des Wissensnetzes wird ein Teilnetz aus Instanz-Einheiten ausgewählter Kategorie-Einheiten gebildet. Dieses Teilnetz wird mit den zu suchenden Daten gefüllt und anschließend bestimmt die Janus-Einheit der Klassifikation diejenigen Stellen im Netz, die am besten zum eingegebenen Teilnetz passen. Wiederum wird als Ergebnis eine Liste von gefundenen Teilnetzen ausgegeben, die optional mit einer Bewertung der Passung versehen sind.

Nachstehend wird die Selektion durch Beschreibung der Nachbarschaft beschrieben.

Ausgehend von einer gegebenen semantischen Einheit ("aktuelle Wurzel") werden alle die semantischen Einheiten als Selektionsergebnis zurückgegeben, die gegebenen Kriterien entsprechen. Diese Kriterien lassen sich wie folgt näher spezifizieren: Klassifikation der zu selektierenden semantischen Einheiten bezüglich einer oder mehrerer gegebenen semantischen Einheiten oder eines Teilnetzes; Klassifikation der semantischen Verknüpfungseinheiten, über die die jeweils in Frage kommenden zu selektierenden Einheiten von der "aktuellen Wurzel" aus erreichbar sind, bezüglich einer oder mehrerer gegebenen semantischen Verknüpfungseinheiten; Bestimmung der Distanz der zu selektierenden semantischen Einheiten zur "aktuellen Wurzel". Erfüllt die Distanz ein bestimmtes Kriterium, wird die jeweils betroffene semantische Einheit als selektiert betrachtet.

Weiterhin besteht die Möglichkeit, daß Janus-Einheiten nur das Netz und/oder seine Inhalte verändern können, wenn sie die Berechtigung hierzu besitzen. Dazu ist es vorteilhaft, die Janus-Einheiten bzw. deren Kategorien mit semantischen Einheiten zu verknüpfen, die Benutzerrechte verwalten.

Ferner können die semantischen Einheiten und deren Informationsinhalte auf unterschiedlichen Datenträgern gespeichert werden. Dies ist insbesondere bei der Anwendung als verteilte Datenbanken von Vorteil. Dabei können die semantischen Einheiten und deren Inhalte sowohl im Hauptspeicher unterschiedlicher Rechnersysteme als auch auf Festplatten und/oder anderen persistenten Speichermedien lokalisiert sein. Zur Veränderung, Klassifikation und Selektion von Teilnetzen eines verteilt gespeicherten Netzes können Janus-Einheiten verwendet werden, die Janus-Einheiten auf anderen Speichermedien beeinflussen.

Die Janus-Einheiten können derart beschaffen sein, daß sie gegen eine Änderung der Inhalte oder der Vernetzung in ihrer Netznachbarschaft ein Veto einlegen können, so daß die Janus-Einheit, die die Veränderung herbeiführen will, in ihrer Operation beeinflußt wird.

Ferner können die Janus-Einheiten den aktuellen Zustand ihrer Netznachbarschaft abspeichern und bei Bedarf wiederherstellen.

Es besteht ebenso die Möglichkeit, daß semantische Einheiten und deren Inhalte und Janus-Einheiten eine eindeutige Kennzeichnung tragen können, oder diese Kennzeichnung kann bei Bedarf berechnet werden. Ferner ist es vorteilhaft, wenn in dieser Kennzeichnung Informationen über die Janus-Einheit abgelegt werden, die die jeweilige semantische Einheit oder den Inhalt oder die Janus-Einheit erzeugt haben, und/oder in der Kennzeichnung Ort und/oder Datum der Erzeugung mit aufgenommen werden.

Schließlich können die semantischen Einheiten, ein Verweis auf ihren Inhalt und ihre Vernetzung als Kollektionen von Kennzeichnungen auf Datenträgern gespeichert werden. Hierbei ist es vorteilhaft, wenn aus der Kennzeichnung Informationen über den aktuellen physikalischen Ort der entsprechenden semantischen Einheit oder ihren Inhalt ermittelt werden können.

## Patentansprüche

1. Computerimplementiertes Verfahren zur Verwendung von fraktalen semantischen Netzen für alle Arten von Datenbankanwendungen, wobei:
das fraktale semantische Netz sowohl semantische Einheiten, die jeweils Informationsinhalte besitzen, als auch Verknüpfungseinheiten enthält, die einen Beziehungsinhalt beschreiben, der jeweils zwei semantische Einheiten derart verknüpft, daß die gegenseitige Beziehung der beiden verknüpften semantischen Einheiten durch den Beziehungsinhalt bestimmt wird, und
ein Wissensnetz Kategorie-Einheiten, die eine allgemeine Kategorie beschreibende semantische Einheiten sind, und Instanz-Einheiten enthält, die eine konkrete Ausprägung einer oder mehrerer Kategorien beschreibende semantische Einheiten sind,
***dadurch gekennzeichnet, daß***:
das wissensnetz weiterhin Janus-Einheiten enthält, die semantische Einheiten sind und mittels Janus-Funktionalität an anderen semantischen Einheiten Operationen ausführen, wobei das Verfahren die folgenden Schritte aufweist:
Heranziehen einer Vernetzung von semantischen Einheiten unter Berücksichtigung von Art, Inhalt, Zusammensetzung und/oder Distanz von anderen semantischen Einheiten in einer jeweiligen Netzumgebung zum Abfragen von Information, zur Klassifikation und zum Selektieren von semantischen Teilnetzen in dem Wissensnetz, und
Heranziehen der Janus-Funktionalität zur lokalen Klassifikation oder zur lokalen Veränderung einer Vernetzung einer semantischen Einheit.

2. Verfahren nach Anspruch 1, ***dadurch gekennzeichnet, daß*** zum Abfragen von Information solche Teilnetze in dem Wissensnetz selektiert werden, die zu einem unter Verwendung von semantischen Einheiten des Wissensnetzes formulierten Teilnetz ähnlich sind.

3. Verfahren nach Anspruch 2, ***dadurch gekennzeichnet, daß*** zur Erweiterung des Wissensnetzes unter Verwendung von neuen Instanz-Einheiten, neuen Kategorie-Einheiten und/oder schon in dem Wissensnetz enthaltenen Kategorie-Einheiten Teilnetze formulierbar sind, die in das Wissensnetz eingehängt werden.

4. Verfahren nach Anspruch 3, ***dadurch gekennzeich*net, *daß*** das Einhängen eines neuen Teilnetzes zusätzlich automatisiert wird, indem mit Hilfe der Janus-Funktionalität Verknüpfungen der in dem Teilnetz enthaltenen semantischen Einheiten verändert werden.

5. Verfahren nach einem der Ansprüche 1 bis 4, ***dadurch gekennzeichnet,* daß** das Verändern des Netzes oder der Informationsinhalte nur durch Janus-Einheiten durchführbar ist, die dazu eine entsprechende Berechtigung besitzen.

6. Verfahren nach einem der Ansprüche 1 bis 5, ***dadurch gekennzeichnet, daß*** die semantischen Einheiten, deren Informationsinhalte, Verknüpfungseinheiten und Janus-Einheiten auf mehreren Speichermedien repräsentiert sind und Janus-Einheiten eines Speichermediums Janus-Einheiten eines anderen Speichermediums beeinflussen können.

7. Verfahren nach einem der Ansprüche 1 bis 6, ***dadurch gekennzeichnet, daß*** vor dem Verändern einer semantischen Einheit die Janus-Einheiten der semantischen Einheiten in einer Netznachbarschaft ein Veto gegen die Veränderung einlegen können.

8. Verfahren nach einem der Ansprüche 1 bis 7, ***dadurch gekennzeichnet, daß*** die Janus-Einheit einer semantischen Einheit, deren Vernetzung und/oder Inhalt verändert werden soll, die Vernetzung und/oder den Inhalt speichert und gegebenenfalls wiederherstellt.

9. Verfahren nach einem der Ansprüche 1 bis 8, ***dadurch gekennzeichnet, daß*** jeder semantischen Einheit, jeder Verknüpfungseinheit, jeder Janus-Einheit und jedem Inhalt einer semantischen Einheit eine eindeutige Kennzeichnung zugeordnet ist, oder diese Kennzeichnung berechenbar ist.

10. Verfahren nach Anspruch 9, ***dadurch gekennzeichnet, daß*** eine semantische Einheit auf einem Datenträger als Kollektion von Kennzeichnungen gespeichert wird.

## Claims

1. Computer-implemented method for the use of fractal semantic networks for all types of database applications, wherein:
the fractal semantic network contains both semantic units that possess respective information contents as well as link units that describe a relation content that respectively links two semantic units such that the mutual relationship of the two linked semantic units is determined through the relation content, and
a knowledge network contains category units that are a general category of describing semantic units and instance units that are a concrete embodiment of one or more categories of describing semantic units,
***characterized in that**:*
a knowledge network further contains Janus units that are semantic units and carry out operations on other semantic units by means of Janus functionality, wherein the method comprises the following steps:
the employment of the networking of semantic units taking into consideration the type, content, composition and/or distance of other semantic units in the respective network environment for the querying of information, classification and/or selecting of semantic sub-networks in this knowledge network; and
the employment of Janus functionality for the local classification or for the local alteration of the networking of a semantic unit.

2. Method in accordance with claim 1, ***characterized in* that**, for the querying of information, such sub-networks in the knowledge network are selected that are similar to a sub-network formulated using semantic units of the knowledge network.

3. Method in accordance with claim 2, ***characterized in that**,* for the extension of the knowledge network, sub-networks that are hung into the knowledge network are formulatable using new instance units, new category units and/or category units already contained in the knowledge network.

4. Method in accordance with claim 3, ***characterized in that*** the hanging in of a new sub-network is additionally automated by altering links of the semantic units contained in the sub-network with the aid of Janus functionality.

5. Method in accordance with one of claims 1 to 4, ***characterized in that*** the alteration of the network or of the information contents can only be carried out via Janus units that possess a corresponding privilege thereto.

6. Method in accordance with one of claims 1 to 5, ***characterized in that*** the semantic units, their information contents, link units and Janus units are represented on several storage media and Janus units of a storage medium can influence Janus units of another storage medium.

7. Method in accordance with one of claims 1 to 6, ***characterized in that**,* prior to the altering of a semantic unit, the Janus units of the semantic units in the network neighborhood can put in a veto against the alteration.

8. Method in accordance with one of claims 1 to 7, ***characterized in that*** the Janus unit of a semantic unit whose networking and/or content is to be altered stores the networking and/or the content and restores these if appropriate.

9. Method in accordance with one of claims 1 to 8, ***characterized in that*** a unique ID is assigned to each semantic unit, each link unit, each Janus unit and each content unit of a semantic unit or this ID is computable.

10. Method in accordance with claim 9, ***characterized in that*** a semantic unit is stored on a data carrier as a collection of ID's.

## Revendications

1. Procédé mis en oeuvre par calculateur en vue de l'utilisation de réseaux sémantiques fractals pour toutes sortes d'applications de banques de données, selon lequel :
le réseau sémantique fractal contient non seulement des unités sémantiques, qui possèdent respectivement des contenus d'informations, mais également des unités de combinaison, qui décrivent un contenu de relations, qui combinent respectivement deux unités sémantiques, de telle sorte que la relation réciproque des deux unités sémantiques combinées est déterminée par le contenu de relation, et
un réseau scientifique contient des unités de catégorie, qui sont des unités sémantiques décrivant une catégorie générale, et des unités d'instance, qui sont une expression concrète d'une ou plusieurs unités sémantiques décrivant des catégories,
**caractérisé en ce que** :
le réseau scientifique contient en outre des unités Janus, qui sont des unités sémantiques et effectuent au moyen de la fonctionnalité Janus des opérations sur d'autres unités sémantiques, le procédé comprenant les étapes suivantes :
utilisation d'une réticulation d'unités sémantiques en tenant compte du type, du contenu, de la composition et/ou de la distance d'autres unités sémantiques dans un environnement de réseaux respectifs en vue de la demande d'informations, en vue de la classification et de la sélection de réseaux partiels sémantiques dans le réseau scientifique, et
utilisation de la fonctionnalité Janus en vue de la classification locale ou de la modification locale d'une réticulation d'une unité sémantique.

2. Procédé selon la revendication 1, **caractérisé en ce qu'**en vue de la demande d'information, ces réseaux partiels sont sélectionnés dans le réseau scientifique, qui sont analogues à un réseau partiel formulé par l'utilisation d'unités sémantiques du réseau scientifique.

3. Procédé selon la revendication 2, **caractérisé en ce qu'**en vue de l'élargissement du réseau scientifique par utilisation de nouvelles unités d'instance, de nouvelles unités de catégorie et/ou des unités de catégorie déjà contenues dans le réseau scientifique des réseaux partiels peuvent être formulés, qui sont rattachés au réseau scientifique.

4. Procédé selon la revendication 3, **caractérisé en ce que** le rattachement d'un nouveau réseau partiel est en outre automatisé, dans lequel à l'aide de la fonctionnalité Janus, des réticulations des unités sémantiques contenues dans le réseau partiel sont modifiées.

5. Procédé selon l'une des revendications 1 à 4, **caractérisé en ce que** la modification du réseau ou des contenus d'informations n'est réalisable que par des unités Janus, qui possèdent une autorisation correspondante à cet effet.

6. Procédé selon une des revendications 1 à 5, **caractérisé en ce que** les unités sémantiques, dont les contenus d'informations, les unités de réticulation et les unités Janus sont représentées sur plusieurs supports de mémoire et des unités Janus d'un support de mémoire peuvent influencer des unités Janus d'un autre support de mémoire.

7. Procédé selon l'une des revendications 1 à 6, **caractérisé en ce qu'**avant la modification d'une unité sémantique, les unités Janus des unités sémantiques dans un voisinage de réseau peuvent imposer un veto contre la modification.

8. Procédé selon l'une des revendications 1 à 7, **caractérisé en ce que** l'unité Janus d'une unité sémantique, dont la réticulation et/ou le contenu doit être modifié, mémorise et éventuellement rétablit la réticulation et/ou le contenu.

9. Procédé selon une des revendications 1 à 8, **caractérisé en ce qu'**à chaque unité sémantique, à chaque unité de combinaison, à chaque unité Janus et à chaque contenu d'une unité sémantique, est associée une caractérisation précise, ou cette caractérisation peut être calculée.

10. Procédé selon la revendication 9, **caractérisé en ce qu'**une unité sémantique est mémorisée sur un support de données en tant que collection de caractérisations.
